# EUROPEAN PATENT APPLICATION

(11) **EP 4 206 953 A1**
(43) Date of publication of application: **05.07.2023**
(21) Application number: 21874157.7
(22) Date of filing: 30.08.2021
(51) Int. Cl.: G06F 16/483

(54) **TARGET CONTENT SEARCH METHOD AND APPARATUS, ELECTRONIC DEVICE AND STORAGE MEDIUM**

(30) Priority: 29.09.2020 CN 202011056294
(71) Applicant: Beijing Zitiao Network Technology Co., Ltd., Beijing 100190 (CN)
(72) Inventor: CHEN, Kojung, Beijing 100190 (CN); QIAN, Cheng, Beijing 100190 (CN); XIONG, Mengyuan, Beijing 100190 (CN); YANG, Jingsheng, Beijing 100190 (CN)
(74) Representative: Dentons Patent Solutions Rechtsanwaltsgesellschaft mbH
(86) International application number: PCT/CN2021/115283
(87) International publication number: WO 2022/068496

(57) **Abstract**

Provided are a target content search method and apparatus, an electronic device, and a storage medium. The method includes determining a target search identifier in search content to be processed and determining a target search strategy corresponding to the target search identifier; generating target search content corresponding to the search content to be processed according to the target search identifier, the target search strategy, and the search content to be processed; and searching out target content corresponding to the target search content from text information.

## Description

This application claims priority to Chinese Patent Application No. 202011056294.1 filed with the China National Intellectual Property Administration (CNIPA) on Sep. 29, 2020, the disclosure of which is incorporated herein by reference in its entirety.

### TECHNICAL FIELD

The present disclosure relates to the field of computer technologies, for example, a target content search method and apparatus, an electronic device, and a storage medium.

### BACKGROUND

When content is searched from a document, search content inputted by a user is generally depended for direct search so as to obtain target content.

The target content obtained by searching in the preceding manner is identical to a search condition. Therefore, associated content associated with the search condition cannot be obtained, resulting in incomplete searched target content and a poor user experience.

### SUMMARY

The present disclosure provides a target content search method and apparatus, an electronic device, and a storage medium so that a search condition is optimized, and corresponding content is searched from a text according to the optimized search condition, thereby improving the comprehensiveness and richness of target content.

The present disclosure provides a target content search method. The method includes the steps described below.

A target search identifier in search content to be processed is determined and a target search strategy corresponding to the target search identifier is determined.

Target search content corresponding to the search content to be processed is generated according to the target search identifier, the target search strategy, and the search content to be processed.

Target content corresponding to the target search content is searched out from text information.

The present disclosure further provides a target content search apparatus. The apparatus includes a target search strategy determination module, a target search content determination module, and a target content determination module.

The target search strategy determination module is configured to determine a target search identifier in search content to be processed and determine a target search strategy corresponding to the target search identifier.

The target search content determination module is configured to generate target search content corresponding to the search content to be processed according to the target search identifier, the target search strategy, and the search content to be processed.

The target content determination module is configured to search out target content corresponding to the target search content from text information.

The present disclosure further provides an electronic device. The electronic device includes one or more processors and a storage apparatus configured to store one or more programs.

The one or more programs, when executed by the one or more processors, cause the one or more processors to perform the preceding target content search method.

The present disclosure further provides a storage medium including computer-executable instructions which, when executed by a computer processor, cause the computer processor to perform the preceding target content search method.

### BRIEF DESCRIPTION OF DRAWINGS

FIG. 1 is a flowchart of a target content search method according to embodiment one of the present disclosure;
FIG. 2 is a flowchart of a target content search method according to embodiment two of the present disclosure;
FIG. 3 is a schematic diagram illustrating that target content is displayed corresponding to marks on a timeline according to embodiment two of the present disclosure;
FIG. 4 is a schematic diagram illustrating that a corresponding mark on a timeline is highlighted after target content is triggered according to embodiment two of the present disclosure;
FIG. 5 is a structural diagram of a target content search apparatus according to embodiment three of the present disclosure; and
FIG. 6 is a structural diagram of an electronic device according to embodiment four of the present disclosure.

### DETAILED DESCRIPTION

Embodiments of the present disclosure are described hereinafter with reference to the drawings. The drawings illustrate some embodiments of the present disclosure, but the present disclosure may be implemented in various manners and should not be limited to the embodiments set forth herein. These embodiments are provided for the understanding of the present disclosure.

The various steps recited in method embodiments of the present disclosure may be performed in a different order and/or in parallel. Additionally, the method embodiments may include additional steps and/or omit the execution of illustrated steps. The scope of the present disclosure is not limited in this respect.

As used herein, the term "include" and variations thereof are intended to be inclusive, that is, "including, but not limited to". The term "according to" is "at least partially according to". The term "an embodiment" refers to "at least one embodiment"; the term "another embodiment" refers to "at least another embodiment"; and the term "some embodiments" refers to "at least some embodiments". Related definitions of other terms are given in the description hereinafter.

Concepts such as "first" and "second" in the present disclosure are merely intended to distinguish one from another apparatus, module, or unit and are not intended to limit the order or interrelationship of the functions performed by the apparatus, module, or unit.

"One" and "a plurality" mentioned in the present disclosure are illustrative, are not intended to limit the present disclosure, and should be understood as "one or more" unless expressed in the context.

### Embodiment one

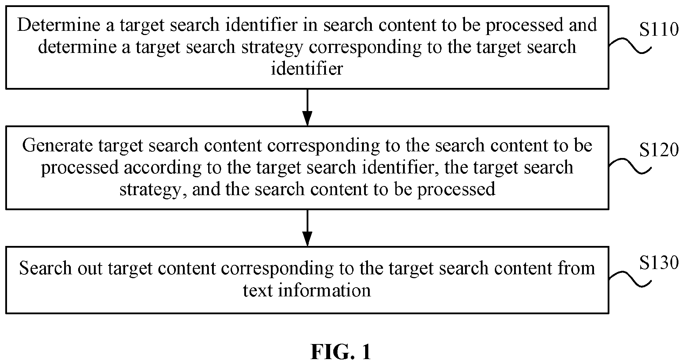

FIG. 1 is a flowchart of a target content search method according to embodiment one of the present disclosure. The embodiment of the present disclosure is applicable to the case where target search content corresponding to content to be processed is determined according to a search identifier in search content to be processed and content consistent with the target search content is selected from a text. The method may be performed by a target content search apparatus, and the apparatus may be implemented in the form of software and/or hardware.

As shown in FIG. 1, the method in this embodiment includes the steps described below.

In S 110, a target search identifier in search content to be processed is determined and a target search strategy corresponding to the target search identifier is determined.

The search content to be processed is content acquired from a target page. A search content editing control is included on the target page. In the search content editing control, the user may edit corresponding content, and the edited content is used as the search content to be processed. Optionally, text information generated according to voice information of different language types or the same language type may further be included on the target page. A variety of search identifiers, optionally, "," and the like are included in the search content to be processed. The search identifier may be preset. In the case where it is detected that the preset search identifier is included in the search content to be processed, it is determined that the search content to be processed includes the search identifier, and the search identifier included in the search content to be processed may be used as the target search identifier.

When the search content to be processed is acquired, whether the search content to be processed includes the search identifier may be determined according to the preset search identifier. If the search content to be processed includes the search identifier, the search identifier in the search content to be processed may be used as the target search identifier. After the target search identifier is determined, the search strategy corresponding to the target search identifier may be determined, so as to determine target search content corresponding to the search content to be processed according to the search strategy.

In some optional implementations of this embodiment, the step of acquiring the search content to be processed that is edited in the search content editing control includes if it is detected that a control for starting a search is triggered, acquiring target search content edited in the search content editing control. Exemplarily, the target page may include the search content editing control and the control for starting a search. Optionally, the control for starting a search may be a "search confirmation" control. A user may edit corresponding content in the search content editing control, and after the content editing is completed, the user may trigger the control for starting a search, that is, click on the "search confirmation" control, and a server may acquire the search content to be processed in the search content editing control.

Alternatively, in other optional implementations, if the search content editing control is triggered, the search content to be processed that is edited in the search content editing control is acquired.

Exemplarily, the target page includes the search content editing control. In the case where it is detected that the user triggers the search content editing control, acquisition of the search content edited in the search content editing control is started, and within a preset time period, optionally, within 30 s, if it is not detected that the user edits new search content, the acquired search content is used as the search content to be processed.

In S120, target search content corresponding to the search content to be processed is generated according to the target search identifier, the target search strategy, and the search content to be processed.

The target search strategy corresponds to the target search identifier, and the target search content corresponding to the search content to be processed may be determined according to the corresponding target search strategy. That is, the target search content is search content obtained after processing the search content to be processed according to the target search strategy. In this embodiment, one, two, or more pieces of the target search content may exist, and the number of pieces of the target search content is related to the target search strategy.

If the search content to be processed includes multiple target search identifiers, the target search strategy corresponding to each target search identifier may be determined, and then the search content to be processed is processed according to the target search strategy, so as to obtain the target search content corresponding to the search content to be processed.

In S130, target content corresponding to the target search content is searched out from text information.

The text information may be any text. Optionally, the text information is a document pre-acquired through an acquisition manner. The text information may be a text determined according to audio information of a multimedia data stream. The multimedia data stream may be generated according to a real-time interactive scenario (for example, a multimedia conference, a live broadcast, and a video chat) or obtained according to recordings. The real-time interactive scenario may be implemented by means of the Internet and a computer, for example, an interactive application program implemented through a native program, a World Wide Web (Web) program, or the like. The audio information of the multimedia data stream may be collected, converted into the corresponding text, and displayed on the target page. The text displayed on the target page may be used as the text information. The target content is the same content as the target search content.

According to the target search content, the same content as the target search content may be selected from the text information and used as the target content. In the technical solution of this embodiment, since the target search content is associated content associated with the search content to be processed, the content associated with the search content to be processed may be selected from the text information according to the target search content, thereby improving the comprehensiveness of the determined target content.

In the technical solution of the embodiment of the present disclosure, the target search identifier in the search content to be processed is acquired, the target search strategy corresponding to the target search identifier is determined, the search content to be processed is optimized according to the target search strategy, that is, a search condition is optimized, and the corresponding target content is selected from the text information according to the optimized search condition, thereby improving the comprehensiveness of the determined target content.

According to the preceding technical solution, after the target content the same as the target search content is selected from the text information, in order to be convenient for the user to determine a position of the target content in the text, the target content may be displayed distinguishably in the text information.

The target content itself is one or more elements in the text information. When displayed, the target content may be displayed distinguishably from other elements, so as to highlight the selected target content, so that the user can find the target content more intuitively and conveniently. The distinguishable display may be in a color, a font, a background pattern, and other display formats.

In some optional implementations of this embodiment, before the target content is selected from the text information, the corresponding text information needs to be generated. Optionally, the step of generating the text information according to the multimedia data stream may be: collecting voice information according to the multimedia data stream; and according to the voice information, an original language type corresponding to the voice information, and a target translation language type, generating the text information that is displayed on the target page and corresponds to the target translation language type.

In some application scenarios, multiple users may participate in real-time interaction or participate in speaking in a screen-recorded video, a language type used by each speaking user to speak may be the same or different, and when language types used by other speaking users differ greatly from the language type used by the present user, the case where the present user cannot know speaking information of other speaking users may exist.

To solve this problem, on the basis of converting the collected voice information of the speaking user into the text information generated according to the original language type, the text information generated according to the original language type may be converted into the text information corresponding to a language type desired by the user (that is, the target translation language type).

The original language type may be understood as the language used by each user participating in voice interaction in the multimedia data stream. Correspondingly, the target translation language type may be understood as the language type desired by the user for displaying the text information. Correspondingly, the text information corresponding to the target translation language type may be translation data that is presented in the target translation language type and corresponds to the voice information. To be convenient for the user to intuitively determine a speaking user and speaking time corresponding to each piece of the translation data from the text information, the text information may display an identity of the speaking user and a speaking timestamp of each piece of the translation data.

Voice data, that is, the voice information, of multiple users participating in an interaction may be collected from the multimedia data stream corresponding to an interaction behavior interface, and the original language type corresponding to the voice information may be recorded. The voice information may be translated from the original language type to the target translation language type, so as to obtain the translation data corresponding to the voice information. The translation data, the identity of the speaking user corresponding to the translation data, and the speaking timestamp are used as the text information displayed on the target page.

In some application scenarios of these optional implementations, a language type selection control may be provided on the target page. In this manner, the user may select the translation language type by triggering the language type selection control on the target page, so as to translate the text information of the original language type generated by the voice information of the speaking user into the text information corresponding to the selected translation language type.

Alternatively, in other application scenarios of these optional implementations, the target translation language type may be determined through at least one of the following manners: acquiring a language type preset on a target client as the target translation language type; or acquiring a login address of the target client and determining the target translation language type corresponding to a geographic location where the target client is located according to the login address.

That is, at least two methods for determining the target translation language type are described below. The first method may be: using a default language type in a device to which the speaking user belongs as the target translation language type; or presetting, by the user, a language type to be converted to use the language type preset by the user as the target translation language type. Exemplarily, before the voice information is converted into the text information, the user may preset the target translation language type. Optionally, when the user triggers the language type selection control, a language type selection list may be popped up on the target page for the user to select from. The user may select any language type. For example, the user triggers a Chinese language type in the language type selection list and clicks on a confirmation button, and a server or a client may determine that the target translation language type is the Chinese language type. That is, the voice information in the multimedia data stream may be converted into Chinese text information which is then displayed on the target page.

The second method may be: acquiring the login address of the client, that is, an Internet Protocol (IP) address of the client, determining a region to which the client belongs according to the login address, determining a language type used in the region, and using the used language type as the target translation language type.

In this embodiment, the voice information in the multimedia data stream is converted into the text information of the target translation language type so that the text information is more in line with reading habits of the user, and the user can quickly understand the content corresponding to the multimedia data stream, thereby improving the interaction efficiency.

On the basis of the above, after the text information is obtained, the method further includes establishing a timestamp synchronization association relationship between the text information and the multimedia data stream and displaying the text information and the multimedia data stream on the target page so that in the case where it is detected that the target content is triggered, a video playing moment in the multimedia data stream corresponding to the target content is jumped to.

The timestamp synchronization association relationship may be understood that the multimedia data stream and the text information are synchronized and associated based on time. In the case where one piece of content in the text information is triggered, a current timestamp corresponding to the piece of content may be determined, and the multimedia data stream corresponding to the current timestamp is jumped to according to the pre-established timestamp synchronization association relationship. For example, a playing position in the multimedia data stream corresponding to the current timestamp is jumped to. Secondly, since the timestamp synchronization association relationship between the multimedia data stream and the text information is established, when a progress bar of the screen-recorded video is dragged to a position, the current timestamp corresponding to this position may be acquired, and according to the pre-established timestamp synchronization association relationship, the content corresponding to the voice content at the playing position in the text information may be determined. To be convenient for the user to determine a position of the text content corresponding to the audio in the text information, the text content may be displayed distinguishably on the target page according to the timestamp synchronization association relationship. Optionally, the text content is highlighted on the target page. In the case where it is detected the text content in the text information is triggered, the current timestamp corresponding to the text content may be acquired, and a corresponding audio and video frame is acquired and displayed according to the timestamp synchronization association relationship. Optionally, if it is detected that the target content is triggered, the current timestamp of the target content is determined; and the video frame in the multimedia data stream corresponding to the current timestamp is jumped to according to the pre-established timestamp synchronization association relationship and the current timestamp.

In the case where it is detected that the user triggers the target content, the current timestamp corresponding to a sentence to which the target content belongs may be acquired. According to the pre-established timestamp synchronization association relationship, the playing position in the multimedia data stream corresponding to the current timestamp is jumped to so that it is convenient for the user to know the mood and state of the speaking user when publishing the voice information including the target content, thereby improving the interaction efficiency.

In the preceding technical solution, the method further includes displaying an identifier of the target content on a timeline corresponding to the multimedia data stream.

After the target content is determined, a timestamp of a sentence to which each piece of the target content belongs may be determined and used as the current timestamp corresponding to the target content. According to the timeline corresponding to the multimedia data stream, each current timestamp corresponding to the target content is displayed on the timeline so that the user can quickly determine the relative position of each piece of the target content in the multimedia data stream.

In the technical solution of this embodiment, the timestamp synchronization association relationship between the multimedia data stream and the text information is established so that synchronization and association between the text information and the multimedia data stream is achieved, and it is convenient for the user to quickly find the position of the corresponding text information in the multimedia data stream and learn the voice information of the speaking user in conjunction with the context, thereby improving the information interaction efficiency.

### Embodiment two

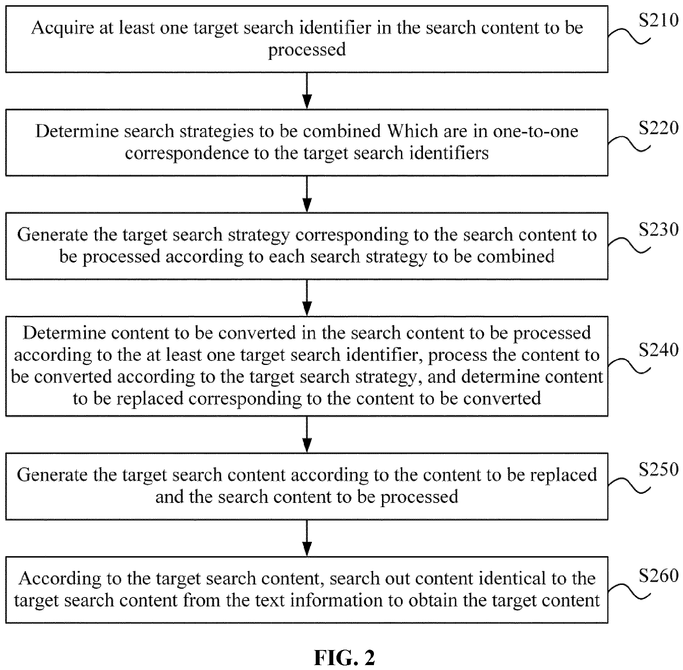

FIG. 2 is a flowchart of a target content search method according to embodiment two of the present disclosure, according to the preceding embodiment, in the case where the target search identifier in the search content to be processed is acquired, search strategies to be combined corresponding to different target search identifiers may be determined, the target search strategy is determined according to the search strategies to be combined, and the target search content corresponding to the search content to be processed is determined according to the target search strategy. Technical terms identical to or corresponding to the preceding embodiments are not repeated here.

As shown in FIG. 2, the method includes the steps described below.

In S210, at least one target search identifier in the search content to be processed is acquired.

The search content to be processed may include one or more target search identifiers. The target search identifiers may be preset special symbols. The special symbols may be ",", "-", and the like.

A search identifier library can be preset and includes multiple search identifiers. Correspondingly, to quickly call a search strategy corresponding to each search identifier, a correspondence between the search identifier and the search strategy may be established so that in the case where it is detected that the search identifier exists, the search strategy corresponding to the search identifier is called according to the correspondence. In this embodiment, the step of acquiring multiple target search identifiers in the search content to be processed may be: according to the preset search identifier library, determining the search identifiers included in the search content to be processed; or acquiring multiple symbols in the search content to be processed, determining a target symbol from the multiple symbols according to the preset search identifier library, and using the target symbol as the target search identifier.

The search content to be processed may include one, two, or more target search identifiers which may be the same or different. If the target search identifiers are the same, the corresponding search strategies are the same.

In S220, search strategies to be combined which are in one-to-one correspondence with the target search identifiers are determined.

After multiple target search identifiers are acquired, the search strategy corresponding to each target search identifier may be determined according to a correspondence table, and the determined search strategy is used as the search strategy to be combined. That is, the search strategy corresponding to each target search identifier may be used as the search strategy to be combined.

If multiple target search identifiers included in the search content to be processed are the same, the search strategies to be combined corresponding to the target search identifiers are the same; and if different target search identifiers exist among the multiple target search identifiers, the corresponding search strategies to be combined may be the same or different.

In this embodiment, the step of determining the search strategy to be combined corresponding to each target search identifier may be: pre-establishing a correspondence between the search identifier and the search strategy. After the target search identifier is acquired, the search strategy to be combined corresponding to the target search identifier may be determined according to the correspondence between the search identifier and the search strategy. If one target search identifier exists, one strategy to be combined may exist; and if multiple target search identifiers exist, multiple search strategies to be combined may exist.

In S230, the target search strategy corresponding to the search content to be processed is generated according to each of the search strategies to be combined.

The target search strategy is made according to each search strategy to be combined. In the case where one search strategy to be combined exists, one target search strategy exists; and in the case multiple search strategies to be combined exist, the target search strategy includes multiple search strategies to be combined.

In S240, content to be converted in the search content to be processed is determined according to the at least one target search identifier, the content to be converted is processed according to the target search strategy, and content to be replaced corresponding to the content to be converted is determined.

The content to be converted is determined according to the target search identifier. The content to be replaced is obtained after processing the content to be converted according to the target search strategy.

If multiple target search identifiers exist, each target search identifier may be processed so as to determine the search strategy corresponding to each target search identifier and the content to be converted, and the content to be replaced corresponding to the content to be converted is determined according to the content to be converted and the search strategy corresponding to the content to be converted.

In this embodiment, the target search strategy includes at least one of the following: a search strategy of performing a combined search for part of character strings in the search content to be processed; a search strategy of determining associated content of part of character strings in the search content to be processed and performing a search according to the associated content; or a search strategy of performing a split search for part of character strings in the search content to be processed.

That is, the search strategy to be combined may be any of the preceding search strategies. The target search strategy is one or more of the preceding search strategies to be combined. Part of the character strings are determined according to the target search identifier in the search content to be processed.

A combined search strategy may be understood as a search strategy of performing a search with the character strings and the target search identifier as a whole after the character strings are determined according to the target search identifier. The search strategy of performing a search according to the associated content may be a strategy of determining a character string according to the target search identifier, determining content associated with the character string, and performing a search according to the determined associated content. The search strategy of split search refers to that after the character string is determined according to the target search identifier, each character string is used as the content to be replaced.

In this embodiment, the corresponding target search strategy and the content to be converted may be determined according to the target search identifier, and the content to be replaced may be generated according to the content to be converted so that the target search content may be generated according to the content to be replaced and the search content to be processed.

The different search identifiers may be divided into at least three types, that is, a first target search identifier, a second target search identifier, and a third target search identifier, and the search strategies corresponding to the different search identifiers may be divided into at least three types. If the search content to be processed includes multiple types of search identifiers, the search strategy corresponding to each type of search identifier may be determined separately, the content to be replaced is determined, and the target search content is generated according to the content to be replaced.

In this embodiment, for determining the content to be converted and the content to be replaced in the search content to be processed according to the target search identifier, reference may be made to at least one of the manners described below. For specific embodiments corresponding to the preceding three types of search strategies, reference may be made to the description described below.

The first manner may be: if the target search identifier includes the first target search identifier, determining a character string adjacent to the first target search identifier according to the first target search identifier and generating the content to be converted according to the character string; and generating the content to be replaced according to the content to be converted and the first target search identifier.

The first target search identifier may be an abbreviated identifier. Optionally, if "you'll" is included in the search content to be processed, the target identifier in this case may be " ' ", and " ' " may be used as the first target search identifier. After the target identifier is determined, the character string adjacent to the target identifier may be determined, and the adjacent character string may be used as the content to be converted. For example, if the target identifier is " ' " and the character string adjacent to the target identifier is "you ll", "you ll" may be used as the content to be converted. The content to be replaced is generated according to the content to be converted and the first target search identifier. Since the target search strategy corresponding to the first target search identifier is the search strategy of performing a combined search for part of character strings in the search content to be processed, the content to be converted and the first target identifier may be combined together as the content to be replaced, and the obtained content to be replaced may be "you'll".

According to the preceding manner, the content to be converted in the search content to be processed can be determined and the content to be replaced corresponding to the content to be converted can be obtained.

The second manner may be: if the target search identifier includes the second target search identifier, acquiring a target character string before and adjacent to the second target search identifier in the search content to be processed and using the target character string as the content to be converted; and determining at least one associated word corresponding to the target character string and determining the content to be replaced according to the at least one associated word.

The target search strategy corresponding to the second target search identifier may be a search strategy of determining associated content of part of character strings in the search content to be processed and performing a search according to the associated content. The second target search identifier is preset. If it is detected that the second target search identifier exists, the character string before and adjacent to the second target search identifier may be acquired as the target character string. The target character string may be used as the content to be converted. Since the search strategy corresponding to the second target search identifier is a search strategy of acquiring the associated content of part of character strings, the associated content may be obtained after performing at least one form transformation on the target character string. Optionally, a tense change, singular and plural changes, and the like are performed on the target character string. A word associated with the target character string may be used as the content to be replaced.

In the case where it is detected that the target search content includes the second target search identifier, the character string before and adjacent to the second target search identifier in the search content to be processed may be acquired as the target character string, and the target character string is used as the content to be converted. Whether the associated content of the target character string exists may be detected. Optionally, the associated content may be words corresponding to the target character string in different tenses, words in a singular form or a plural form, and the like. If the associated content of the target character string exists, the associated content of the content to be converted is determined, and the determined associated content is used as the content to be replaced.

In this embodiment, the associated word, that is, the associated content, includes at least one of a derivative of the target character string, a character string in multiple tenses corresponding to the target character string, a singular form of the target character string, or a plural form of the target character string.

The derivative may be a word corresponding to the target character string determined by using the target character string as a root word. The tenses include the present tense, the future tense, and the past tense, and the words corresponding to the target character string in different tenses may be determined. Whether the target character string has a singular form and a plural form may be determined. If the target character string has a singular form and a plural form, the singular form and the plural form of the target character string are associated words.

Whether the associated word of the target character string exists may be determined. If the associated word of the target character string exists, the corresponding associated word may be acquired according to the preceding principle, and the associated word is used as the content to be replaced.

The third manner may be: if the target search identifier includes the third target search identifier, determining a character string adjacent to the third target search identifier according to the third target search identifier and generating the content to be converted according to the character string; and using each character string in the content to be converted as the content to be replaced.

The target search strategy corresponding to the third target search identifier may be the search strategy of performing a split search for part of character strings in the search content to be processed. Part of character strings are determined according to the third target search identifier. The third target search identifier is an identifier for performing a split search for part of character strings. Optionally, the third identifier may be ",", "-", and the like. If it is detected that the search content to be processed includes the third target search identifier, the character string adjacent to the third target search identifier is determined. Since the search strategy corresponding to the third target search identifier is the character string split search strategy, the character strings determined in this case may be used as the content to be converted separately.

Exemplarily, if "A-B" is included in the search content to be processed and the acquired search identifier included in the search content to be processed is "-", the target search identifier is determined to be "-". The target search strategy corresponding to "-" is a strategy of performing a split search for part of character strings, and the character strings adjacent to the target search identifier may be acquired. Optionally, the acquired adjacent character strings are "A" and "B", that is, the character strings "A" and "B" are the content to be converted. "A" and "B" in the content to be converted may be used as the content to be replaced, respectively.

In S250, the target search content is generated according to the content to be replaced and the search content to be processed.

If the search content to be processed includes one target search identifier, at least one piece of the content to be replaced corresponding to the target search identifier may be determined, and both the content to be replaced and the search content to be processed may be used as one search condition in the target search content. If the search content to be processed includes at least two target search identifiers, the content to be converted corresponding to each target search identifier and at least one piece of the content to be replaced corresponding to each piece of the content to be converted may be determined according to corresponding search strategies, respectively. Each piece of the content to be converted is separately replaced with the content to be replaced, so as to obtain the target search content.

Optionally, the content to be converted in the search content to be processed is replaced with the content to be replaced, so as to obtain at least one piece of target sub-search content; and the target search content is generated according to the at least one piece of target sub-search content.

More than one piece of the content to be replaced corresponding to the search content to be processed exists, and a corresponding position in the search content to be processed may be replaced with the content to be replaced. Optionally, the corresponding content to be converted is replaced with the content to be replaced, and the search content to be processed after the replacement is used as one piece of target sub-search content in the target search content. That is, the target search content may include multiple pieces of target sub-search content, and the target sub-search content is obtained after the content to be converted in the search content to be processed is replaced with the content to be replaced. The number of pieces of target sub-search content corresponds to the number of pieces of content to be replaced.

The content to be replaced corresponding to each piece of the content to be converted may be acquired, and the content to be converted may be replaced with the corresponding content to be replaced, so as to obtain at least one piece of target sub-search content in the target search content. A set of at least one piece of target sub-search content is the target search content.

In S260, according to the target search content, content identical to the target search content is searched out from the text information so as to obtain the target content.

After the target search content is determined, the content identical to the target search content may be acquired from the text information and used as the target content.

In the technical solution of the embodiment of the present disclosure, the target search identifier in the search content to be processed is acquired, the target search strategy corresponding to the target search identifier is determined, and the search content to be processed is improved and enriched according to the target search strategy so that the target search content is obtained, and when the corresponding target content is searched from the text information according to the target search content, the comprehensiveness and richness of the target content are improved.

According to the preceding technical solution, the method further includes determining a timestamp of each piece of the target content on the timeline corresponding to the multimedia data stream and marking a position corresponding to the timestamp on the timeline.

The timeline corresponds to the multimedia data stream. Optionally, the total duration corresponding to the multimedia data stream is 50 min, and the timeline corresponding to the multimedia data stream is also 50 min.

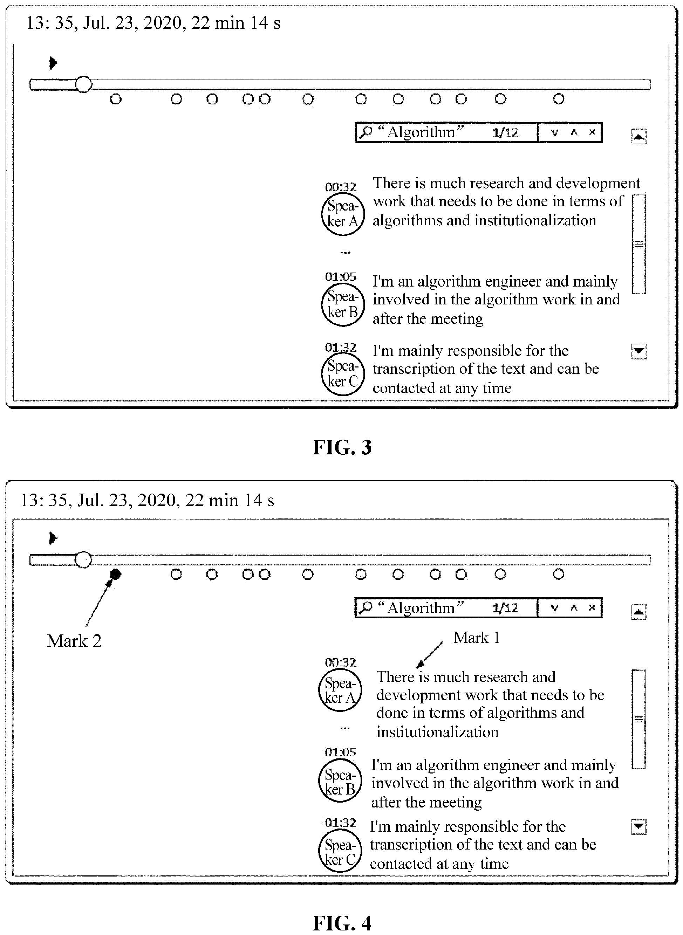

After the target content is determined, the timestamp corresponding to the target content may be determined according to a sentence to which the target content belongs. After the timestamp corresponding to the target content is determined, a position of the timestamp corresponding to the target content on the timeline may be determined and marked. For example, the position is marked with a dot below the timeline or with a triangle, as shown in FIG. 3.

According to the preceding technical solution, the step of marking the position of the timestamp corresponding to the target content on the timeline includes determining a position of a control among multiple controls in one-to-one correspondence with all timestamps on the timeline and marking the position; where the control corresponds to the timestamp which corresponds to the target content and is used for adjusting an audio and video frame of the multimedia data stream. Referring to FIG. 3, the position of the control is where the dot mark is located.

Exemplarily, referring to FIG. 3, the search content edited by the user in the search content editing control is "algorithm", the target content the same as the "algorithm" may be searched out from the text information and displayed distinguishably, for example, highlighted, the timestamp of the sentence to which the target content belongs is determined, and marking is performed on the timeline corresponding to the multimedia data stream according to the timestamp. For example, marking is performed with the dot. The color, size, and the like of the mark may be set by the user according to actual requirements and not limited herein.

The number of pieces of the target content may be displayed in the search content editing control. For example, the total number displayed in the search content editing control is 12, as shown in FIG. 3.

In this embodiment, marking the audio and video frame corresponding to the target content on the timeline is advantageous in that the user can clearly determine the position of the target content in the multimedia data stream according to the mark on the timeline, thereby improving the convenience of finding the corresponding target content.

More than one piece of the target content may exist. Correspondingly, more than one mark exists on the timeline. Referring to FIG. 3, the number of pieces of the target content is 12, and the number of marks on the timeline is also 12. To be convenient for the user to determine the ranking of the currently triggered target content among all pieces of the target content, the search content editing control further displays a sequence to which the currently triggered target content corresponds.

According to the preceding technical solution, the method further includes in the case where it is detected that one piece of the target content is triggered, determining a target timestamp corresponding to the one piece of the target content; and displaying a mark corresponding to the target timestamp distinguishably.

The user may trigger any one of pieces of the target content. In the case where it is detected that the user triggers the target content, the timestamp (the target timestamp) corresponding to the target content triggered by the user may be determined, a target mark corresponding to the target timestamp on the timeline may be determined, and the target mark is displayed distinguishably from other marks on the timeline, so as to highlight the target mark. For example, the target mark and other marks are displayed distinguishably in different colors.

Exemplarily, referring to FIG. 4, in the case where the user triggers the target content corresponding to mark 1, the timestamp (which is also referred as to the target timestamp) corresponding to the target content corresponding to the mark 1 may be determined, and according to the target timestamp, a position of mark 2 corresponding to the target timestamp on the timeline may be determined, so as to highlight the position of the mark 2.

In this embodiment, in the case where the target content is triggered, distinguishably displaying the mark corresponding to the target content on the timeline is advantageous in that the user can learn the position of the triggered target content in the multimedia data stream, thereby improving the accuracy of the audio and video frame corresponding to the target content determined by the user.

### Embodiment three

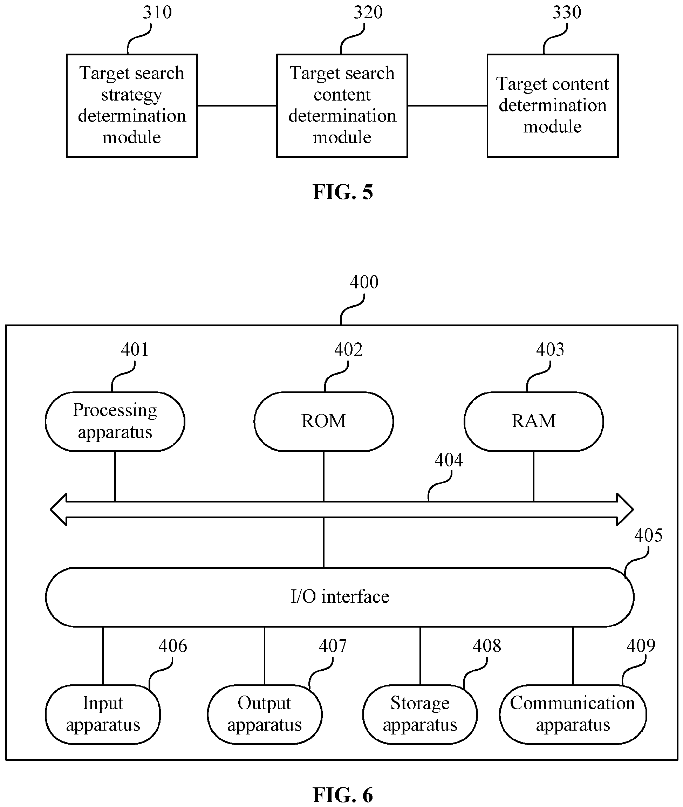

FIG. 5 is a structural diagram of a target content search apparatus according to embodiment three of the present disclosure. As shown in FIG. 5, the apparatus includes a target search strategy determination module 310, a target search content determination module 320, and a target content determination module 330.

The target search strategy determination module 310 is configured to determine a target search identifier in search content to be processed and determine a target search strategy corresponding to the target search identifier. The target search content determination module 320 is configured to generate target search content corresponding to the search content to be processed according to the target search identifier, the target search strategy, and the search content to be processed. The target content determination module 330 is configured to search out target content corresponding to the target search content from text information.

In the technical solution of the embodiment of the present disclosure, the target search identifier in the search content to be processed is acquired, the target search strategy corresponding to the target search identifier is determined, the search content to be processed is optimized according to the target search strategy, that is, a search condition is optimized, and the corresponding target content is selected from the text information according to the optimized search condition, thereby improving the comprehensiveness and accuracy of the determined target content.

According to the preceding technical solution, the target search strategy determination module 310 includes a target search identifier determination unit, a search strategy to be combined determination unit, and a target search strategy determination unit.

The target search identifier determination unit is configured to acquire at least one target search identifier in the search content to be processed. The search strategy to be combined determination unit is configured to determine a search strategy to be combined corresponding to each of the at least one target search identifier. The target search strategy determination unit is configured to generate the target search strategy corresponding to the search content to be processed according to each search strategy to be combined.

According to the preceding technical solution, the target search strategy includes at least one of the following: a search strategy of performing a combined search for part of character strings in the search content to be processed; a search strategy of determining associated content of part of character strings in the search content to be processed and performing a search according to the associated content; or a search strategy of performing a split search for part of character strings in the search content to be processed. Part of the character strings are determined according to the target search identifier in the search content to be processed.

According to the preceding technical solution, the target search content determination module 320 is configured to determine content to be converted in the search content to be processed according to each of the at least one target search identifier, process the content to be converted according to the target search strategy, determine content to be replaced corresponding to the content to be converted, and generate the target search content according to the content to be replaced and the search content to be processed.

According to the preceding technical solution, the target search strategy includes a search strategy of performing a combined search for part of character strings in the search content to be processed. The target search content determination module 320 includes a first content to be converted determination unit and a first content to be replaced determination unit. The first content to be converted determination unit is configured to, in the case where the at least one target search identifier includes a first target search identifier, determine a character string adjacent to the first target search identifier according to the first target search identifier and generate the content to be converted according to the character string. The first content to be replaced determination unit is configured to generate the content to be replaced according to the content to be converted and the first target search identifier.

According to the preceding technical solution, the target search strategy includes a search strategy of determining associated content of part of character strings in the search content to be processed and performing a search according to the associated content. The target search content determination module 320 includes a second content to be converted determination unit and a second content to be replaced determination unit. The second content to be converted determination unit is configured to, in the case where the at least one target search identifier includes a second target search identifier, acquire a target character string before and adjacent to the second target search identifier in the search content to be processed and use the target character string as the content to be converted. The second content to be replaced determination unit is configured to determine at least one associated word corresponding to the content to be converted and determine the content to be replaced according to the at least one associated word.

According to the preceding technical solution, the at least one associated word includes at least one of a derivative of the target character string, a character string in multiple tenses corresponding to the target character string, a singular form of the target character string, or a plural form of the target character string.

According to the preceding technical solution, the target search strategy includes a search strategy of performing a split search for part of character strings in the search content to be processed. The target search strategy determination module 310 includes a third content to be converted determination unit and a third content to be replaced determination unit. The third content to be converted determination unit is configured to, in the case where the at least one target search identifier includes a third target search identifier, determine a character string adjacent to the third target search identifier according to the third target search identifier and generate the content to be converted according to the character string. The third content to be replaced determination unit is configured to use each character string in the content to be converted as the content to be replaced.

According to the preceding technical solution, the target search content determination module 320 includes a target sub-search content determination unit and a target search content determination unit.

The target sub-search content determination unit is configured to replace the content to be converted in the search content to be processed with the content to be replaced to obtain at least one piece of target sub-search content. The target search content determination unit is configured to generate the target search content according to the at least one piece of target sub-search content.

According to the preceding technical solution, the target content determination module 330 is configured to, according to the target search content, search out content identical to the target search content from the text information to obtain the target content.

According to the preceding technical solution, the target content is displayed distinguishably in the text information.

According to the preceding technical solution, the apparatus further includes a voice information determination module and a text information determination module.

The voice information determination module is configured to determine voice information according to a multimedia data stream. The text information determination module is configured to, according to the voice information, an original language type corresponding to the voice information, and a target translation language type, generate the text information that is displayed on a target page and corresponds to the target translation language type.

According to the preceding technical solution, the apparatus further includes a display module configured to display an identifier of the target content on a timeline corresponding to the multimedia data stream.

According to the preceding technical solution, the apparatus further includes a timestamp synchronization association relationship determination module configured to establish a timestamp synchronization association relationship between the text information and the multimedia data stream and display the text information and the multimedia data stream on a target page so that in the case where it is detected that one piece of the target content is triggered, a video frame in the multimedia data stream corresponding to the one piece of the target content is jumped to.

According to the preceding technical solution, the apparatus further includes a current timestamp determination unit and a video frame determination unit. The current timestamp determination unit is configured to, in the case where it is detected that the one piece of the target content is triggered, determine a current timestamp of the one piece of the target content. The video frame determination unit is configured such that the video frame in the multimedia data stream corresponding to the current timestamp is jumped to according to the pre-established timestamp synchronization association relationship and the current timestamp.

The target content search apparatus provided in the embodiment of the present disclosure may perform the target content search method provided in any embodiment of the present disclosure and has function modules and effects corresponding to the method performed.

The multiple units and modules included in the preceding apparatus are just divided according to functional logic but are not limited to such division, as long as the corresponding functions can be implemented. Additionally, names of functional units are just for distinguishing between each other but not to limit the protection scope of the embodiments of the present disclosure.

### Embodiment four

FIG. 6 is a structural diagram of an electronic device 400 (such as a terminal device or a server in FIG. 6) applicable to implementing the embodiments of the present disclosure. The terminal device in the embodiments of the present disclosure may include, but is not limited to, a mobile terminal such as a mobile phone, a laptop, a digital broadcast receiver, a personal digital assistant (PDA), a portable Android device (PAD), a portable media player (PMP) and an in-vehicle terminal (such as an in-vehicle navigation terminal) and a stationary terminal such as a digital television (TV) and a desktop computer. The electronic device shown in FIG. 6 is merely an example and should not impose any limitation to the function and usage scope of the embodiments of the present disclosure.

As shown in FIG. 6, the electronic device 400 may include a processing apparatus (such as a central processing unit and a graphics processing unit) 401. The processing apparatus 401 may execute multiple appropriate actions and processing according to a program stored in a read-only memory (ROM) 402 or a program loaded into a random-access memory (RAM) 403 from a storage apparatus 408. Various programs and data required for the operation of the electronic device 400 are also stored in the RAM 403. The processing apparatus 401, the ROM 402, and the RAM 403 are connected to each other through a bus 404. An input/output (I/O) interface 405 is also connected to the bus 404.

Generally, the following apparatuses may be connected to the I/O interface 405: an input apparatus 406 including, for example, a touchscreen, a touchpad, a keyboard, a mouse, a camera, a microphone, an accelerometer, and a gyroscope, an output apparatus 407 including, for example, a liquid crystal display (LCD), a speaker, and a vibrator, the storage apparatus 408 including, for example, a magnetic tape and a hard disk, and a communication apparatus 409. The communication apparatus 409 may allow the electronic device 400 to perform wireless or wired communication with other devices to exchange data. Although FIG. 6 shows the electronic device 400 having various apparatuses, not all the apparatuses shown here need to be implemented or present. Alternatively, more or fewer apparatuses may be implemented or present.

According to the embodiments of the present disclosure, the process described above with reference to a flowchart may be implemented as a computer software program. For example, a computer program product is included in embodiments of the present disclosure. The computer program product includes a computer program carried in a non-transitory computer-readable medium. The computer program includes program codes for executing the method shown in the flowchart. In such an embodiment, the computer program may be downloaded from a network and installed through the communication apparatus 409, or may be installed from the storage apparatus 408, or may be installed from the ROM 402. When the computer program is executed by the processing apparatus 401, the preceding functions defined in the methods in the embodiments of the present disclosure are implemented.

The electronic device provided in the embodiment of the present disclosure belongs to the same concept as the target content search method provided in the preceding embodiments. For the technical details not described in detail in this embodiment, reference may be made to the preceding embodiments, and this embodiment has the same effects as the preceding embodiments.

### Embodiment five

An embodiment of the present disclosure provides a computer storage medium storing a computer program which, when executed by a processor, performs the target content search method provided in the preceding embodiments.

The computer-readable medium described above in the present disclosure may be a computer-readable signal medium or a computer-readable storage medium or any combination thereof. For example, the computer-readable storage medium may be, but is not limited to, an electrical, magnetic, optical, electromagnetic, infrared, or semiconductor system, apparatus, or device or any combination thereof. An example of the computer-readable storage medium may include, but is not limited to, an electrical connection having one or more wires, a portable computer magnetic disk, a hard disk, a RAM, a ROM, an erasable programmable read-only memory (EPROM), a flash memory, an optical fiber, a portable compact disc read-only memory (CD-ROM), an optical storage device, a magnetic storage device, or any suitable combination thereof. In the present disclosure, the computer-readable storage medium may be any tangible medium including or storing a program. The program may be used by or used in conjunction with an instruction execution system, apparatus or device. In the present disclosure, the computer-readable signal medium may include a data signal propagated on a baseband or as a part of a carrier, and computer-readable program codes are carried in the data signal. The data signal propagated in this manner may be in multiple forms and includes, but is not limited to, an electromagnetic signal, an optical signal or any suitable combination thereof. The computer-readable signal medium may further be any computer-readable medium other than the computer-readable storage medium. The computer-readable signal medium may send, propagate, or transmit a program used by or used in conjunction with an instruction execution system, apparatus or device. The program codes included on the computer-readable medium may be transmitted by any suitable medium, including, but not limited to, a wire, an optical cable, a radio frequency (RF), or any suitable combination thereof.

In some embodiments, clients and servers may communicate using any currently known or future developed network protocol, such as the Hypertext Transfer Protocol (HTTP), and may be interconnected with any form or medium of digital data communication (for example, a communication network). Examples of the communication network include a local area network (LAN), a wide area network (WAN), an inter-network (for example, the Internet), a peer-to-peer network (for example, an ad hoc network), and any network currently known or developed in the future.

The computer-readable medium may be included in the electronic device or may exist alone without being assembled into the electronic device.

The computer-readable medium carries one or more programs which, when executed by the electronic device, cause the electronic device to perform the steps described below.

A target search identifier in search content to be processed is determined and a target search strategy corresponding to the target search identifier is determined; target search content corresponding to the search content to be processed is generated according to the target search identifier, the target search strategy, and the search content to be processed; and target content corresponding to the target search content is searched out from text information.

Computer program codes for executing operations in the present disclosure may be written in one or more programming languages or a combination thereof. The preceding programming languages include, but are not limited to, object-oriented programming languages such as Java, Smalltalk, and C++ and may also include conventional procedural programming languages such as C or similar programming languages. Program codes may be executed entirely on a user computer, executed partly on a user computer, executed as a stand-alone software package, executed partly on a user computer and partly on a remote computer, or executed entirely on a remote computer or a server. In the scenario involving the remote computer, the remote computer may be connected to the user computer through any type of network, including a LAN or a WAN, or the connection may be made to an external computer (for example, through the Internet using an Internet service provider).

The flowcharts and block diagrams in the drawings show possible architectures, functions and operations of the system, method and computer program product according to multiple embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved. It is also to be noted that each block in the block diagrams and/or flowcharts and a combination of blocks in the block diagrams and/or flowcharts may be implemented by a special-purpose hardware-based system executing a specified function or operation or may be implemented by a combination of special-purpose hardware and computer instructions.

The units involved in the embodiments of the present disclosure may be implemented by software or hardware. The name of a unit/module is not intended to limit the unit in a certain circumstance. For example, a target search strategy determination module may also be described as "a search strategy determination module".

The functions described above herein may be executed, at least partially, by one or more hardware logic components. For example, without limitation, example types of hardware logic components that can be used include a field-programmable gate array (FPGA), an application-specific integrated circuit (ASIC), an application-specific standard product (ASSP), a system-on-chip (SoC), a complex programmable logic device (CPLD), and the like.

In the context of the present disclosure, a machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Examples of the machine-readable storage medium may include an electrical connection based on one or more wires, a portable computer disk, a hard disk, a RAM, a ROM, an EPROM, a flash memory, an optical fiber, a CD-ROM, an optical storage device, a magnetic storage device, or any suitable combination thereof.

According to one or more embodiments of the present disclosure, example one provides a target content search method. The method includes the steps described below.

A target search identifier in search content to be processed is determined and a target search strategy corresponding to the target search identifier is determined; target search content corresponding to the search content to be processed is generated according to the target search identifier, the target search strategy, and the search content to be processed; and target content corresponding to the target search content is searched out from text information.

According to one or more embodiments of the present disclosure, example two provides a target content search method. The method further includes the following.

Optionally, the step of determining the target search identifier in the search content to be processed and determining the target search strategy corresponding to the target search identifier includes the steps described below.

At least one target search identifier in the search content to be processed is acquired; a search strategy to be combined corresponding to each of the at least one target search identifier is determined; and the target search strategy corresponding to the search content to be processed is generated according to each search strategy to be combined.

According to one or more embodiments of the present disclosure, example three provides a target content search method. The method further includes the following.

Optionally, the target search strategy includes at least one of the following: a search strategy of performing a combined search for part of character strings in the search content to be processed; a search strategy of determining associated content of part of character strings in the search content to be processed and performing a search according to the associated content; or a search strategy of performing a split search for part of character strings in the search content to be processed; where part of the character strings are determined according to the target search identifier in the search content to be processed.

According to one or more embodiments of the present disclosure, example four provides a target content search method. The method further includes the following.

Optionally, the step of generating the target search content corresponding to the search content to be processed according to the target search identifier, the target search strategy, and the search content to be processed includes the steps described below.

Content to be converted in the search content to be processed is determined according to each of the at least one target search identifier, the content to be converted is processed according to the target search strategy, and content to be replaced corresponding to the content to be converted is determined; and the target search content is generated according to the content to be replaced and the search content to be processed.

According to one or more embodiments of the present disclosure, example five provides a target content search method. The method further includes the following.

Optionally, the target search strategy includes a search strategy of performing a combined search for part of character strings in the search content to be processed; and the step of determining the content to be converted in the search content to be processed according to each of the at least one target search identifier, processing the content to be converted according to the target search strategy, and determining the content to be replaced corresponding to the content to be converted includes the steps described below.

In the where the at least one target search identifier includes a first target search identifier, a character string adjacent to the first target search identifier is determined according to the first target search identifier and the content to be converted is generated according to the adjacent character string; and the content to be replaced is generated according to the content to be converted and the first target search identifier.

According to one or more embodiments of the present disclosure, example six provides a target content search method. The method further includes the following.

Optionally, the target search strategy includes a search strategy of determining associated content of part of character strings in the search content to be processed and performing a search according to the associated content; and the step of determining the content to be converted in the search content to be processed according to each of the at least one target search identifier, processing the content to be converted according to the target search strategy, and determining the content to be replaced corresponding to the content to be converted includes the steps described below.

In the case where the at least one target search identifier includes a second target search identifier, a target character string before and adjacent to the second target search identifier in the search content to be processed is acquired and the target character string is used as the content to be converted; and at least one associated word corresponding to the content to be converted is determined and the content to be replaced is determined according to the at least one associated word.

According to one or more embodiments of the present disclosure, example seven provides a target content search method. The method further includes the following.

Optionally, the at least one associated word includes at least one of a derivative of the target character string, a character string in multiple tenses corresponding to the target character string, a singular form of the target character string, or a plural form of the target character string.

According to one or more embodiments of the present disclosure, example eight provides a target content search method. The method further includes the following.

Optionally, the target search strategy includes a search strategy of performing a split search for part of character strings in the search content to be processed; and the step of determining the content to be converted in the search content to be processed according to each of the at least one target search identifier, processing the content to be converted according to the target search strategy, and determining the content to be replaced corresponding to the content to be converted includes the steps described below.

In the case where the at least one target search identifier includes a third target search identifier, a character string adjacent to the third target search identifier is determined according to the third target search identifier and the content to be converted is generated according to the adjacent character string; and each character string in the content to be converted is used as the content to be replaced.

According to one or more embodiments of the present disclosure, example nine provides a target content search method. The method further includes the following.

Optionally, the step of generating the target search content according to the content to be replaced and the search content to be processed includes the steps described below.

The content to be converted in the search content to be processed is replaced with the content to be replaced so as to obtain at least one piece of target sub-search content; and the target search content is generated according to the at least one piece of target sub-search content.

According to one or more embodiments of the present disclosure, example ten provides a target content search method. The method further includes the following.

Optionally, the step of searching out the target content corresponding to the target search content from the text information includes the step described below.

According to the target search content, content identical to the target search content is searched out from the text information so as to obtain the target content.

According to one or more embodiments of the present disclosure, example eleven provides a target content search method. The method further includes the following.

Optionally, the target content is displayed distinguishably in the text information.

According to one or more embodiments of the present disclosure, example twelve provides a target content search method, where the text information is determined according to audio information of a multimedia data stream.

According to one or more embodiments of the present disclosure, example thirteen provides a target content search method, where the text information includes translation text information; where the translation text information is generated according to the audio information, an original language type corresponding to the audio information, and a target translation language type.

According to one or more embodiments of the present disclosure, example fourteen provides a target content search method. The method further includes the step described below.

Optionally, an identifier of the target content is displayed on a timeline corresponding to the multimedia data stream.

According to one or more embodiments of the present disclosure, example fifteen provides a target content search method. The method further includes the following.

Optionally, after the text information is obtained, the method further includes the step described below.

A timestamp synchronization association relationship between the text information and the multimedia data stream is established and the text information and the multimedia data stream are displayed on a target page so that in the case where it is detected that one piece of the target content is triggered, a video frame in the multimedia data stream corresponding to the one piece of the target content is jumped to.

According to one or more embodiments of the present disclosure, example sixteen provides a target content search method. The method further includes the following.

Optionally, the step in which in the case where it is detected that the one piece of the target content is triggered, the video frame in the multimedia data stream corresponding to the one piece of the target content is jumped to includes the steps described below.

In the case where it is detected that the one piece of the target content is triggered, a current timestamp of the one piece of the target content is determined; and the video frame in the multimedia data stream corresponding to the current timestamp is jumped to according to the pre-established timestamp synchronization association relationship and the current timestamp.

According to one or more embodiments of the present disclosure, example seventeen provides a target content search method. The method further includes the following.

Optionally, the step of displaying the identifier of the target content on the timeline corresponding to the multimedia data stream includes the step described below.

A timestamp of each piece of the target content on the timeline corresponding to the multimedia data stream is determined and a position corresponding to the timestamp on the timeline is marked.

According to one or more embodiments of the present disclosure, example eighteen provides a target content search method. The method further includes the following.

Optionally, the step of marking the position corresponding to the timestamp on the timeline includes the step described below.

A position of a control corresponding to the timestamp which corresponds to the target content is determined among multiple controls in one-to-one correspondence with all timestamps on the timeline and the position is marked; where the control is used for adjusting an audio and video frame of the multimedia data stream.

According to one or more embodiments of the present disclosure, example nineteen provides a target content search method. The method further includes the steps described below.

Optionally, in the case where it is detected that one piece of the target content is triggered, a target timestamp corresponding to the one piece of the target content is determined; and a mark corresponding to the target timestamp is displayed distinguishably.

According to one or more embodiments of the present disclosure, example twenty provides a target content search apparatus. The apparatus includes a target search strategy determination module, a target search content determination module, and a target content determination module.

The target search strategy determination module is configured to determine a target search identifier in search content to be processed and determine a target search strategy corresponding to the target search identifier. The target search content determination module is configured to generate target search content corresponding to the search content to be processed according to the target search identifier, the target search strategy, and the search content to be processed. The target content determination module is configured to search out target content corresponding to the target search content from text information.

In addition, although multiple operations are depicted in a particular order, this should not be construed as requiring that such operations should be performed in the shown particular order or in a sequential order. In certain circumstances, multitasking and parallel processing may be advantageous. Similarly, although implementation details are included in the preceding discussion, these should not be construed as limiting the scope of the present disclosure. Some features described in the context of separate embodiments may also be implemented in combination in a single embodiment. Conversely, various features described in the context of a single embodiment may also be implemented in multiple embodiments individually or in any suitable sub-combination.

## Claims

1. A target content search method, comprising:
determining a target search identifier in search content to be processed and determining a target search strategy corresponding to the target search identifier;
generating target search content corresponding to the search content to be processed according to the target search identifier, the target search strategy, and the search content to be processed; and
searching out target content corresponding to the target search content from text information.

2. The method of claim 1, wherein determining the target search identifier in the search content to be processed and determining the target search strategy corresponding to the target search identifier comprises:
acquiring at least one target search identifier in the search content to be processed;
determining search strategies to be combined which are in one-to-one correspondence with the at least one target search identifier; and
generating the target search strategy corresponding to the search content to be processed according to each of the search strategies to be combined.

3. The method of any one of claims 1 to 2, wherein the target search strategy comprises at least one of the following:
a search strategy of performing a combined search for part of character strings in the search content to be processed;
a search strategy of determining associated content of part of character strings in the search content to be processed and performing a search according to the associated content; or
a search strategy of performing a split search for part of character strings in the search content to be processed;
wherein part of the character strings are determined according to the target search identifier in the search content to be processed.

4. The method of claim 2, wherein generating the target search content corresponding to the search content to be processed according to the target search identifier, the target search strategy, and the search content to be processed comprises:
determining content to be converted in the search content to be processed according to each of the at least one target search identifier, processing the content to be converted according to the target search strategy, and determining content to be replaced corresponding to the content to be converted; and
generating the target search content according to the content to be replaced and the search content to be processed.

5. The method of claim 4, wherein the target search strategy comprises a search strategy of performing a combined search for part of character strings in the search content to be processed;
wherein determining the content to be converted in the search content to be processed according to each of the at least one target search identifier, processing the content to be converted according to the target search strategy, and determining the content to be replaced corresponding to the content to be converted comprises:
in a case where the at least one target search identifier comprises a first target search identifier, determining a character string adjacent to the first target search identifier according to the first target search identifier and generating the content to be converted according to the adjacent character string; and
generating the content to be replaced according to the content to be converted and the first target search identifier.

6. The method of claim 4, wherein the target search strategy comprises a search strategy of determining associated content of part of character strings in the search content to be processed and performing a search according to the associated content;
wherein determining the content to be converted in the search content to be processed according to each of the at least one target search identifier, processing the content to be converted according to the target search strategy, and determining the content to be replaced corresponding to the content to be converted comprises:
in a case where the at least one target search identifier comprises a second target search identifier, acquiring a target character string before and adjacent to the second target search identifier in the search content to be processed and using the target character string as the content to be converted; and
determining at least one associated word corresponding to the content to be converted and
determining the content to be replaced according to the at least one associated word.

7. The method of claim 6, wherein the at least one associated word comprises at least one of a derivative of the target character string, a character string in a plurality of tenses corresponding to the target character string, a singular form of the target character string, or a plural form of the target character string.

8. The method of claim 4, wherein the target search strategy comprises a search strategy of performing a split search for part of character strings in the search content to be processed;
wherein determining the content to be converted in the search content to be processed according to each of the at least one target search identifier, processing the content to be converted according to the target search strategy, and determining the content to be replaced corresponding to the content to be converted comprises:
in a case where the at least one target search identifier comprises a third target search identifier, determining a character string adjacent to the third target search identifier according to the third target search identifier and generating the content to be converted according to the adjacent character string; and
using each character string in the content to be converted as the content to be replaced.

9. The method of claim 4, wherein generating the target search content according to the content to be replaced and the search content to be processed comprises:
replacing the content to be converted in the search content to be processed with the content to be replaced to obtain at least one piece of target sub-search content; and
generating the target search content according to the at least one piece of target sub-search content.

10. The method of claim 1, wherein searching out the target content corresponding to the target search content from the text information comprises:
according to the target search content, searching out content identical to the target search content from the text information to obtain the target content.

11. The method of claim 1, further comprising:
displaying the target content distinguishably in the text information.

12. The method of claim 1, wherein the text information is determined according to audio information of a multimedia data stream.

13. The method of claim 12, wherein the text information comprises translation text information; wherein the translation text information is generated according to the audio information, an original language type corresponding to the audio information, and a target translation language type.

14. The method of claim 12, further comprising:
displaying an identifier of the target content on a timeline corresponding to the multimedia data stream.

15. The method of claim 12, wherein after the text information is obtained, the method further comprises:
establishing a timestamp synchronization association relationship between the text information and the multimedia data stream and displaying the text information and the multimedia data stream on a target page so that in a case where it is detected that one piece of the target content is triggered, a video frame in the multimedia data stream corresponding to the one piece of the target content is jumped to.

16. The method of claim 15, wherein in the case where it is detected that the one piece of the target content is triggered, jumping to the video frame in the multimedia data stream corresponding to the one piece of the target content comprises:
in the case where it is detected that the one piece of the target content is triggered, determining a current timestamp of the one piece of the target content; and
jumping to the video frame in the multimedia data stream corresponding to the current timestamp according to the pre-established timestamp synchronization association relationship and the current timestamp.

17. The method of claim 14, wherein displaying the identifier of the target content on the timeline corresponding to the multimedia data stream comprises:
determining a timestamp of each piece of the target content on the timeline corresponding to the multimedia data stream and marking a position corresponding to the timestamp on the timeline.

18. The method of claim 17, wherein marking the position corresponding to the timestamp on the timeline comprises:
determining a position of a control corresponding to the timestamp among a plurality of controls in one-to-one correspondence with all timestamps on the timeline and marking the position;
wherein the control is used for adjusting an audio and video frame of the multimedia data stream.

19. The method of claim 18, further comprising:
in a case where it is detected that one piece of the target content is triggered, determining a target timestamp corresponding to the one piece of the target content; and
displaying a mark corresponding to the target timestamp distinguishably.

20. A target content search apparatus, comprising:
a target search strategy determination module configured to determine a target search identifier in search content to be processed and determine a target search strategy corresponding to the target search identifier;
a target search content determination module configured to generate target search content corresponding to the search content to be processed according to the target search identifier, the target search strategy, and the search content to be processed; and
a target content determination module configured to search out target content corresponding to the target search content from text information.

21. An electronic device, comprising:
at least one processor; and
a storage apparatus configured to store at least one program;
wherein the at least one program, when executed by the at least one processor, causes the at least one processor to perform the target content search method of any one of claims 1 to 19.

22. A storage medium comprising computer-executable instructions which, when executed by a computer processor, cause the computer processor to perform the target content search method of any one of claims 1 to 19.
